(19) Europäisches Patentamt / European Patent Office / Office européen des brevets

(11) **EP 2 237 227 A1**

(12) **EUROPEAN PATENT APPLICATION**

(43) Date of publication:
**06.10.2010 Bulletin 2010/40**

(51) Int Cl.:
**G06T 7/20** (2006.01)

(21) Application number: **09157131.5**

(22) Date of filing: **01.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Nederlandse Organisatie voor Toegepast -Natuurwetenschappelijk Onderzoek TNO 2628 VK Delft (NL)**

(72) Inventors:
• **Alefs, Bram G.**
  **2100 Kornenburg (AT)**
• **Dijk, Judith**
  **2497 AN Den Haag (NL)**

(74) Representative: **Hatzmann, Martin et al Vereenigde Johan de Wittlaan 7 2517 JR Den Haag (NL)**

(54) **Video sequence processing method and system**

(57) A method is provided that detects image points in images from a video sequence where 3D points are visible that do not lie on the ground (or more generally a basic 3D surface). The method involves overall transforms from images from the video sequence for time points T' in a range of time points onto an image from the video sequence for a selected time point T. The overall transforms associate basic regions in the image for the selected time point T to further regions in the images for other time points T'. A set of difference measures between basic data representative of statistical distribution of values derived from the image for image positions in the basic region and the further regions. For each of the basic regions, an accumulated value of the difference measures in the set is computed. In this way it can be detected whether points in regions that show textured surfaces are outside the basic 3D surface.

Fig. 1

**Description**

Background

Optical recording has become a major tool for investigating scenes of crimes and accidents. In order to achieve full coverage of the scene of investigation (SOI) recorded data need to overview physical arrangement of items, including details on object structure and surfaces. Especially if using a video camera, the amount of recorded data accumulates fast, putting high demand on local storage devices and human effort needed to review data afterwards. Even during recording, the person handling the camera easily loses track on what has been recorded, which typically results in unnecessary repetitions and misses. Computer vision techniques strongly aid the process of recording SOI, for example by (supervised) storage reduction and feedback on recorded scene shot. Such techniques are especially valuable if processed on-site and near real-time.

3D-reconstruction has been an important tool for analyzing SOIs. A basic distinction can be made between laser based (active) techniques and (stereo) vision based passive techniques. Typically, laser based approaches miss the quality for visual interpretation of surface structure and color, but provides more accurate distance measures than camera systems do. Many techniques have been proposes, using laser scanning and computer vision [1] [2], covering a wide spread of recording conditions. Computer vision techniques are often designed for reconstruction with indoor construction and turn-table based recording setup. These usually do not work for recordings with a hand held device in outdoor conditions. Camera systems often miss the accuracy for automatic determination of the recording location within the scene.

One particular application of reconstruction is the simultaneous localization and mapping (SLAM) for the recorded scene [3]. These techniques mostly based use cameras positioned on a (robotic) vehicle. Results are difficult to reproduces using a hand held camera, for which motion parameters are less restricted. For crime scenes, vehicles are difficult to navigate and may not guarantee full coverage without human interaction. Using hand-held cameras, only few techniques are proposed for 3D-reconstruction [5, 15]. Mostly, these techniques use matching of feature points to determine egomotion between subsequent camera view points. Typically, robust determination of the egomotion is difficult and computational intensive, badly suitable for hand-held computer systems [4, 9]. Furthermore, the choice of key-frames, i.e. the set of perspectives for which feature points are matched is critical for the reconstruction result. Usually, the set of key-frames is selected by hand. Automatic key-frame selection causes errors, especially for long data sequences of handheld recordings, which contain interruptions and may show a low consistency [6, 7].

US patent No 7,447,337 describes methods of selecting video segments and detecting moving objects in a video sequence. The method comprises selection of an affine transformation that represents the effect of camera motion on successive video frames where the frames show a main 3D plane. The video sequence is segmented into "sentences" of video frames wherein pairs of successive frames have similar affine transformations.

When the affine transformation is used to compensate for the effect of camera motion, the image content in blocks in the video frames that show the main plane will be substantially similar. In contrast, blocks that show objects that do not lie in the main plane will result in content differences, these blocks are called outliers. US patent No 7,447,337 proposes to identify such objects by detecting blocks that show in substantial content differences after compensation for camera motion.

US patent No 7,447,337 notes that this technique is vulnerable to noise that leads to false detections. The presence of complex texture in particular is identified as a source of noise that leads to false detection of outliers at blocks where the main plane is in view. US patent No 7,447,337 proposes to eliminate such blocks by spatial clustering of outlier blocks into larger regions and the elimination of outlier blocks if they do not belong to a region of sufficient size. Furthermore, video frames that do not show one dominant region are filtered out from use in object detection.

This technique has the problem that it can detect only large objects. Various implicit assumptions are made about objects that are important. These assumptions lead to a bias that, although useful to eliminate noise, can also lead to detection failures.

Furthermore, the technique used to identify video sequences is less suitable for selecting key shots for recording information about a scene of investigation. The use of similarity between affine transformations fails to reduce the recorded information in a way that preserves relevant objects.

Summary

Among others it is an object to provide for a more robust way of selecting image regions in images from a video sequence where objects outside a main three dimensional plane in a scene are visible.

A method according to claim 1 is provided. Herein overall transforms are determined that map images from the video sequence for a time points T' in a range of time points onto an image from a video sequence for a selected time point T. Affine transforms may be used for example, with a single affine transform for the transform from the image for one time point T' to the image for the selected time point T. In an embodiment the overall transforms may be determined based on the video sequence, for example by selecting transformations that map sets of selected image features in images for different time points onto each other, or by minimizing least square differences between the mapped images.

For each of a plurality of basic regions in the image for the selected time point T, a set of difference measures between data representative of statistical distribution of values derived from the images in the basic region is computed. The basic regions may be square blocks for example and each basic region having the same shape, pixel locations (except possibly pixel locations near image boundaries) each having an associated basic region shifted relative to the basic regions of other pixel locations by an amount corresponding to the difference between the pixel locations. However, position dependent regions and regions of other shapes may be used.

The set of difference measures for a basic region expresses an amount of difference between basic data for that basic region and data for further regions that are mapped onto the basic regions by the overall transformations. In an embodiment, the transformation maps the further regions identically onto the basic regions, but alternatively further regions may be used of which at least a reference point maps identically onto a reference point of the basic region. Data is used that is representative of statistical distribution of the values derived from the images for time points T and T', for positions in the basic region and the further regions. The derived data may be grey values for pixel locations, or gradients between the grey value at the pixel location and one or more of its neighboring locations, color values, color vectors gradients of color values or color vectors etc. The data may represent the statistical distribution by means of a histogram, i.e. a set of counts of locations that have values in respective "histogram bins" (ranges of values used for the histogram). Alternatively, a set of moments may be used (powers of the values averaged over the regions, optionally corrected with lower order powers, for different integer powers, for example power one and two (e.g. average and variance), or one two and three).

By using differences between data representative of statistical distribution instead of pixel value differences, the comparison is made robust against the strong position dependence of pixel comparisons in textured areas. Thus, texture becomes an asset rather than a liability. For each of the basic regions, an accumulated value of the difference measures in the set. In an embodiment the accumulated values may be compared to a threshold to detect pixel locations that show points outside a three dimensional basic plane with points that transform according to the overall transformation. A fixed threshold may be used for example, but instead a plurality of thresholds or an adaptive threshold may be used.

In an embodiment a count of basic blocks is made for which the accumulated value exceeds a threshold value and local maxima in the count as a function of time are used to select isolated time points. In a further embodiment such isolated time points may be used to select key images.

The method may be implemented using a processor of an image processing system. This processor may be configured to perform the steps of the method. As used herein, "configured" may mean that the processor is programmable and that it comprises a stored program to make it perform the steps, or that the processor is hardwired to perform part or all of the steps, with a stored program to perform the remainder of the steps whose execution is not hardwired.

Brief description of the drawing

These and other object and advantageous aspects will become apparent from a description of exemplary embodiments

Figure 1 shows an example of camera motion
Figure 2 shows matched feature points
Figure 3 shows a visualization of a planar transformation
Figure 4 shows examples of motion correction
Figure 5 shows segmentation
Figure 6 shows consistency values (left) and a similarity matrix (right)
Figure 7 shows loop closure detection

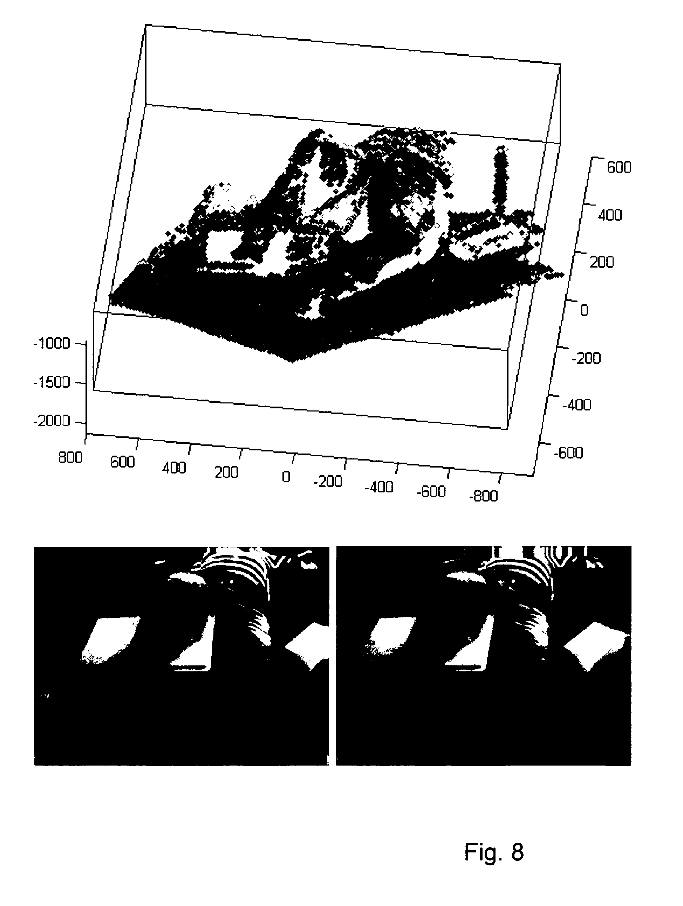

Figure 8 shows reduction of point cloud complexity
Figure 9 shows annotations of results
Figure 10 shows automatically selected key frames
Figure 11 shows point cloud ensembles
Figure 12 shows an image processing system
Figure 13 shows a flow-chart of location detection
Figure 14 shows a flow-chart of time point selection

Detailed description of exemplary embodiments

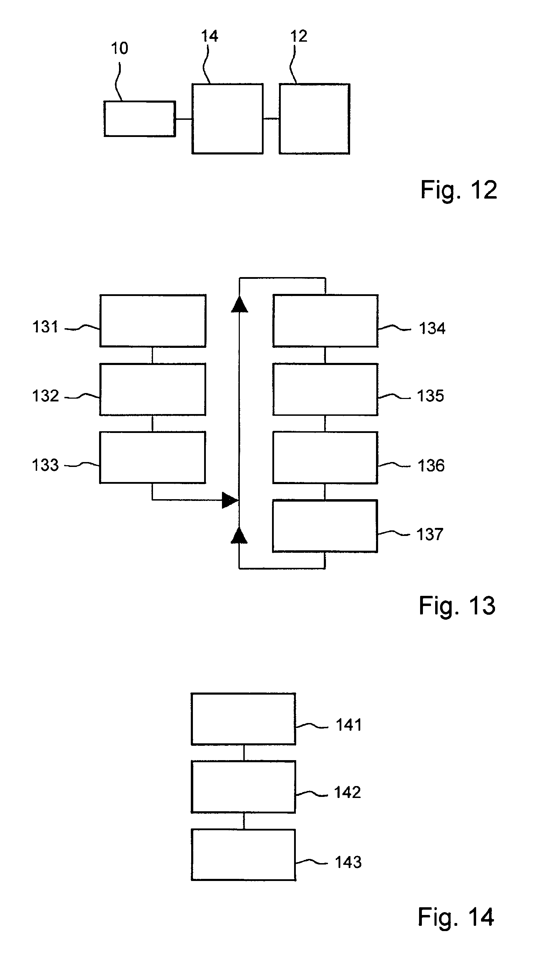

Figure 12 shows an image processing system, comprising a digital camera 10, a processor 12 and a memory device 14 coupled to camera 10 and processor 12.

In operation camera is moved around in a scene of investigation to direct it at an object from various angles and/or distances and/or at various objects, while the camera writes a video sequence of captured images into memory device 14. During, or after, capture of these images processor 12 processes the images. A method of processing will be described that is suitable for real time processing, i.e. for obtaining results for an image at a selected time point within a predetermined amount of time from that time point.

A first image processing process performed by processor 12 is directed at the selection of locations in the image where points are visible that do not lie in a main three dimensional plane of a scene that is being recorded (e.g. not on a horizontal ground surface). This process may be implemented using a number of steps as shown in figure 13. It should be noted that the relevant operations may be grouped into steps in other ways than shown in this flow-chart. For the purpose of description a grouping according to function is used.

In a first step 131 a sequence of video images is captured by camera 10 and recorded in memory device 14. In a second step 132, processor 10 defines a grid of blocks in each image and computes data for respective blocks that is representative for a statistical distribution of image values within respective blocks in the images. In an embodiment the data is a histogram of numbers of pixel locations in the block that have image intensity values in respective value ranges (called "bins"). Similar histograms may be computed for color components of pixel values, for edge intensity values produced by the application of edge operators to the image, detected edge orientation values etc. Thus for each block in each image respective data is computed. In other embodiments other statistical data may be used, such as a correlation function (average product of image content at positions in the block with an offset relative to each other, as a function of the offset), spectral values (e.g. absolute squares of Fourier coefficients for the block), average and variance values, or higher order moments (e.g. averages of image values taking to different powers).

It should be appreciated that in each of these examples the statistical data suppresses "phase information" that is strongly dependent on small spatial shift of image content. The statistical data is determined by a sum of contributions for different positions (grey values, gradient values, color values, product of values at fixed offsets to the position etc), wherein the contributions different for positions contribute with equal weight, or at least with weights that vary slowly as a function of position, at most with a single rise and fall between the edges of the block and its centre. In this way the effects of small shifts of texture on the statistical data is avoided.

In a third step 133, processor 10 selects a time point T in the video sequence and in a fourth step 134 processor 10 determines affine transforms onto an image for that time point T from images for a set of time points T' in a range of time points [T-D,T+D] containing the selected time point T. As is known per se an affine transform provides for translation, rotation and independent stretching or compression in two spatial directions. For each pair of images at the selected time point T and a time point T' an affine transformation is selected that, when applied to one of the images minimizes a difference criterion between the images or part thereof. The difference criterion may be a sum of squared distances between feature points in the images, or a least square pixel difference etc. Alternatively external camera position and/or orientation measurements may be used, obtained for example with a GPS receiver and/or orientation sensors if the camera is not mounted at a fixed orientation to select a transformation.

Instead of affine transforms any other type of overall transform may be used, such as a transform associated with transformation of a perspective view of a three dimensional surface of predetermined shape (such as a flat plane) due to translation and/or rotation of a camera relative to that surface. However, an affine transform with a single set of position independent affine transform parameters is usually a good approximation of this type of overall transform. The overall transform may additionally account for pixel position dependence of imaging geometry of the camera. As used herein an "overall transform" is any transform that corresponds to effect of camera motion and/or rotation but that does not depend on observation of localized discontinuous changes in distance to individual observed three dimensional points.

In a fifth step 135, processor 12 computes accumulated difference measures for the blocks B. Conceptually, this comprises applying the transformations to the images for time points T' in the range [T-D,T+D], computing statistical data for blocks in these transformed images, computing difference measures between the statistical data for blocks in the image for the selected time point T and the statistical data for corresponding blocks in the transformed images and accumulating the results for different values of T'. The blocks B in the transformed images correspond to blocks B' in the original images, which may be translated, rotated, isotropically scaled and/or deformed in comparison to the transformed blocks. Effectively, the affine transformation is applied to transform the block boundaries of the blocks.

Difference measure computation in fifth step processor 12 involves comparing the data that is representative for a statistical distribution of values at pixel locations in the respective block B with data that is representative for a statistical distribution of values at pixel locations in blocks B'(T') in the images for time points T' from the range [T-D,T+D].

In an embodiment the difference measure is computed as an intersection function between histograms. This comparison of a first and second histogram may be implemented by taking the minimum of values in corresponding bins in the first and second histogram and summing these minimum values over different bins. Additionally this intersection may be normalized. When correlation functions are used, squared differences of correlations for corresponding offsets may be summed over different offsets to compute the difference measure, or a similar sum may be used for squared differences of absolute squares of Fourier coefficients. Normalization of such sums may be used. In an embodiment computation of the statistical data and computation of the difference may be combined in a single operation without an explicit separate computation of the statistical data.

Accumulation of the difference measures for the block, may for example involve summing absolute values of the difference values for different time points T' weighted by weights W(T-T') that depend on the distance between the selected time point T and the time point T' for which the difference value was determined. The result of fifth step is an accumulated difference value A(B(T)) for the block in the image at the selected time point T. Such accumulated difference values A are determined for each of the blocks in the image at the selected time point T.

In a sixth step 136, processor 12 compares the accumulated difference values A with a threshold V to select detect blocks with accumulated difference values A that exceed the threshold. These blocks are labelled out of plane blocks. In a seventh step a next time point T is selected and the process is repeated from fourth step 134.

It should be appreciated that different combinations of the operations may be used. For example, in an embodiment the statistical data for the original image at time points T' may be used, and transformed to data for mapped blocks. This may be realized by comparing a block B at a position r in the image for the selected time point T with a block in an image for another time point T' at a position r' obtained by applying the inverse of the transformation for that time point T' to the position r. In addition, the statistical data for the block in the image for the other time point T' may be transformed to account for the effect of the transformation. Thus for example, if the statistical information comprises a correlation function, the argument of this function may be transformed according to the transformation, a corresponding transformation may be applied for statistical data in the frequency domain, or moments may be transformed according to the transformation. However, if the scaling and/or rotation associated with the transformation is small, or in transformation invariant data is used, such a transformation of the statistical data may be omitted.

Furthermore it should be appreciated that the affine transformations to the image at the selected time point T from time points T' may be selected in combination with transformations between images for other pairs of time points T1, T2, for example to impose a constraint that the transformation from time point T to time point T1 is a composition of the transformations from time point T to an intermediate time point T2 and from intermediate time point to time point T1.

In another embodiment, no separate difference measures are computed for all combinations of time points T and T' in the range [T-D,T+D]. Instead, difference measures are computed only for pairs of successive time points T"-1, T", after applying the transformation found for the images for this pair of time points to the image for one of these time points. In this embodiment the difference measure for a block B in the image for the selected time point T and a corresponding block at a time point T' may be computed by summing the difference measures for blocks in pairs of images for intervening time points T", T"-1. In this computation the block used in one of these images may be a block at a position obtained by transforming the position of the block B in the image for the selected time point T to the relevant one of these images according to the selected transformation. This embodiment may overestimate the difference measure for T, T', but if the image changes progressively this degree of overestimation may be small. The advantage of this embodiment is that far less difference measures need to be computed. when accumulated difference measures are computed for a plurality of selected time points T.

It should be appreciated that the process makes it possible to use textured areas to identify image regions that show objects outside the main plane of the scene. Use of textured areas contributes to the robustness of detection because they are more informative about image flow than untextured areas. Whereas comparison between residual images (image containing pixel value differences) can easily lead to false detection of point outside the basic three dimensional image plane, the use of data that is representative for a statistical distribution of values at pixel locations in a block substantially reduces the risk of such false detection.

Although an embodiment may be considered wherein the accumulated difference measure is computed for a grid of non-overlapping square blocks into which the image is divided for the selected time point, it should be appreciated that alternatively each pixel position may be associated with a respective regions of any size containing that pixel position, so that accumulated difference values may be computed for each pixel position. Preferably, the regions within the image for the selected time point have equal shapes, the regions differing only by translation according to the distance between the pixels for which the regions are used.

Preferably separable statistical data is used, i.e. data that can be computed by first computing statistical data by first summing in a first spatial direction, and subsequently summing the results of the first summing in a second spatial direction transverse to the first spatial direction. This makes it possible to reuse the results of the first summing for different positions along the second spatial direction.

Preferably statistical data is used that can be computed from integrated images. An integrated image is an image $INT(x,y)$ in which data $D(x,y)$ for a pixel location with coordinates $(x,y)$ is a sum of data from an input image at all locations $(x', y')$ with coordinates $x'$, $y'$ less than or equal to $x$ and $y$ respectively. The sum of data $D(x,y)$ from the input image in a block of width w and height h can be determined from such an integrated image $INT(x,y)$ by taking differences $INT(x+w,y+h)-INT(x+w,y)-INT(x,y+h)+INT(x,y)$. In the case of a histogram for example, the data $D(x,y)$ is a vector, which components associated with respective bins of the histogram and an component values equal one or zero, dependent on whether an image value at the pixel position (x,y), or other value derived from the image, such as a gradient or edge strength, lies in the bin or not. Determining the integrated image involves summing component by component. In this way histograms for a plurality of blocks can be computed with a minimum of duplicated effort.

Instead of integrating over an area of pixels with coordinates x', y' less than or equal to x and y (upper left rectangle of the image touching at its lower right corner on x,y) other integration areas may be used, such as a lower right rectangle, a lower left rectangle etc. In an embodiment the integration area for an image for a time point T' may be selected dependent on the affine transform for that image, with area boundaries that are a map of the boundaries of the upper left rectangle for example. Thus it is made easy to compute histograms for transformed blocks, using the expression INT(R22)-INT(R21)-INT(R12)+INT(R11), where R11, R12, R21 and R22 are the coordinates of corners of transformed blocks.

Although an embodiment has been shown wherein the range of time points with respect to which difference measures are accumulated for a selected time point is selected centred around the selected time points, it should be appreciated that different ranges may be used. For example a range ending at the time point may be used, which makes it possible to return results faster. As another alternative a range ending at the selected time point may be used. Many options are possible, provided that overlapping scene parts are imaged at the selected time point and at time points in the range.

In an embodiment, the range may be selected dependent on loop detection. As is known per se, a loop may occur if the camera returns to imaging a 3 dimensional location after digressing to imaging other locations. This may occur e.g. when a cameraman panoramically turns the camera over three hundred and sixty degrees, or when the camera walks away from a location and walks back again. Loop detection may be used to detect such loops, for example by comparing measured camera positions obtained with a position sensor (e.g. with a GPS system), or determining match scores between pairs of video images with a time interval in between. The measured time interval DT can be used to select the range of time points to be used for the process, so that the range for a time point contains time points T' T+DT-DELTA to T+DT+DELTA.

A second image processing process performed by processor 12 is directed at the selection of time points for key shots. Figure 14 shows a flow chart of a process for this selection. In a first step 141 computes respective count values N(T), each for an image at a respective time point T, each count N(T) value indicating a number of blocks in the image for the respective time point T the have been labelled "out of plane". The count values N(T) form a function of time. In a second step 142, processor 12 selects the time points Ti where this function has maxima as a function of time. The selected time points are used to select key frames or key shots.

As will be appreciated the selected time points of maxima correspond to time points at which a maximum amount of "out of plane" area is visible. By using these time points to control selective storage of images, or to compute three dimensional positions of points that are visible in the images for these selected time points, a maximum amount of information can be provided with a minimum number of selected time points.

In an embodiment the counts may be weighted counts, wherein the contributions of "out of plane" blocks are weighted dependent on position of the block in the image, with a weighting function that drops of as a function of position from the centre of the image. In an embodiment the temporal function N(T) is low pass filtered before the time points Ti are selected where the low pass filtered function has maxima as a function of time counts may be weighted counts. A selection may be applied to the time points Ti to eliminate multiple time points that lie close to each other. For example by eliminating selected time points Ti that lie within a predetermined distance from a time point with higher N(Ti') while the function N(T) does not drop below a predetermined fraction of the maximum value between the time points.

Among others a technique is disclosed for on-site data processing of key-frames serving a first and second purpose. First, redundant recording and missed items or views are minimized and key-shots are selected for purpose of posterior visualization. Second, coverage of view-points and key-frames are selected for purpose of 3D-reconstruction of individual objects and reconstruction of physical arrangement of the scene. The techniques are illustrated for recordings of a crime scene, using a hand-held stereo video head as is typically used for efficient recording and 3D-reconstruction purposes.

The purpose of determining key-shot is slightly different to that of determining key-frames, namely, providing an overview of the recorded data. However, techniques determining key-shots largely relate to selection of key-frames as used for video compression [11]. Many key-shot techniques are based on cuts in the subsequent recordings, providing useful results for compression or editing [12]. For SOI, recordings are typically continuously, i.e. without cuts. Segmentation techniques need to be more advanced and, in an ideal case, based on the contents of the recorded scene. Since the latter is difficult to obtain for general purposes, this paper suggests a method for key-shot selection based on the ego-motion of the camera. The proposed method uses a measure for similarity of the object's appearance, in order to segment the video sequence in key-shots for visualization, as well as it provides a set of key-frames for 3D reconstruction.

The proposed measure for key-frame selection uses the ego-motion of the camera as caused by the path and view point direction, at which the scene is recorded. Many papers discuss multi-view analysis using a freely moved hand held camera, moved with the purpose of navigation, scene registration or stitching or creating panoramic images [4, 15].

Restricting the purpose to either one, the geometrical constraints for determining the ego-motion can be simplified to either motion in a preferred direction, specific rotation or assumptions on stationary of the recorded objects [5, 6]. In case of image registration, different techniques are proposed for key-frame selection, such as based on image contents, amount of detected and tracked feature points [8].

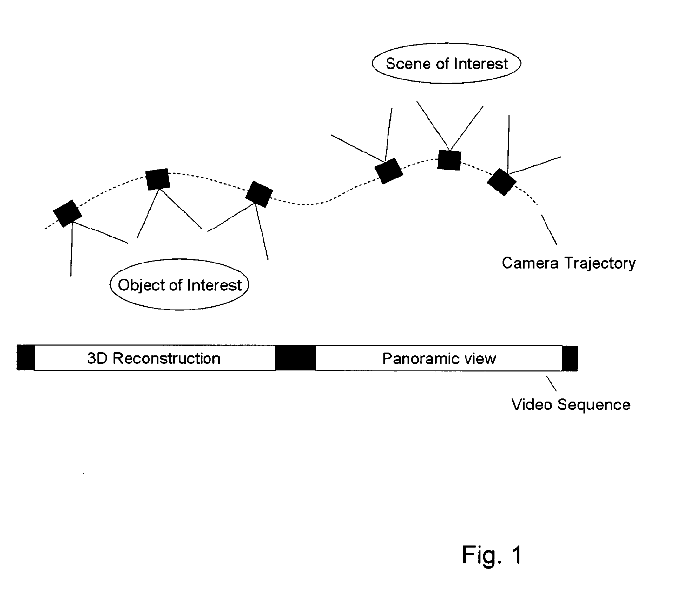

Figure 1 illustrates a typical motion pattern for recording SOI with a hand-held camera. The first part of the camera trajectory (concave with respect to a position behind the camera) provides different viewpoints of the same object and the related video segment can be used for 3D-reconstruction (indicated in the lower bar). The second part of the camera trajectory (convex with respect to the space behind the camera) provides a panoramic view of the scene. For this part, the translation is relatively small with respect to its rotation, and subsequent frames show less overlap than in the first case. This segment is less useful for 3D-reconstruction, since it provides fewer view points of the same object. Typically, such ego-motion can be used for creating a panoramic view of the area, e.g. by using image stitching techniques.

On a mathematical level, ego-motion can be described using a planar projective transformation. For the isotropic case, i.e. ignoring lens distortions, transformation between points (x,y) and (x', y') can be expressed as a matrix multiplication of a vector (x,y,1) to obtain a vector (x',y',1), the matrix having a 2x2 block that represents rotation and a column that represents translation. This transformation does not suffice for 3D-reconstruction of an object, other than a plane. For full 3D-reconstruction, the epipolar geometry and some calibration parameters, relating the object size to the distance of the camera needs to be known. Let $P = K[R \mid t]$ be a decomposition of the camera projection x=PX where x is a point in the image, and X the corresponding point in world coordinates, K is a 3x3 camera calibration matrix and $[ R \mid t ]$ is the 3x4 matrix consisting of the rotation matrix R and translation parameters t for the camera motion, respectively. Now, x can be expressed in normalized coordinates $x' = K^{-1} x$, and the essential matrix E can be solved from the equation x1'Ex1=0. Where, x1 and x1'are corresponding points in subsequent video frames and E is the essential matrix. The essential matrix mainly differs from the fundamental matrix since it has less degree of freedom and therefore it can be solved more robustly.

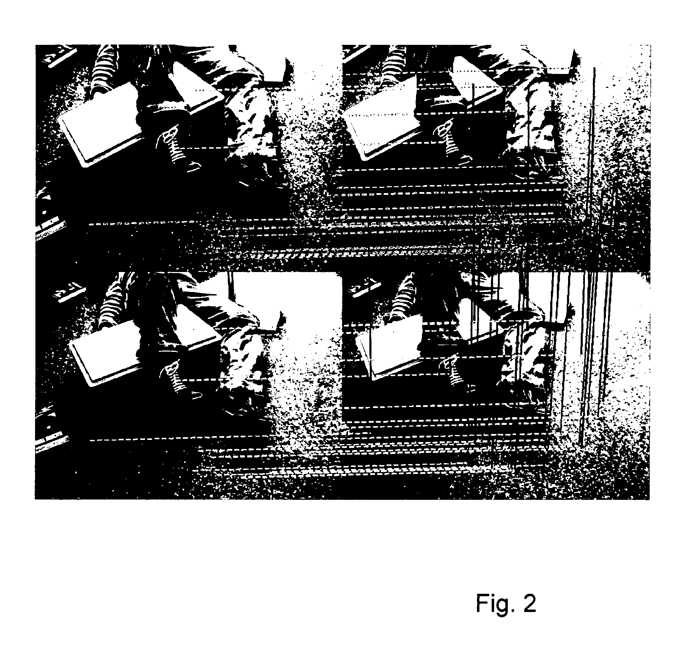

Outdoor registration techniques often base on simultaneous localization and mapping (SLAM) [2] [3]. Here, global constraints on egomotion, such as planarity and camera rotation are used to interpret the most likely camera trajectory, thereby mapping surrounding objects to a single reference system. For hand-held cameras, with fast rotations and changing distance to the objects, global constraints are usually not fulfilled and SLAM only works partly. More local oriented reconstruction techniques, iteratively apply the equation for the essentiality matrix for a subsequent set of key-frames, while minimizing drift and error accumulation base on local constraints [15]. For irregular recorded video sequences, like recordings of SOI, such techniques require human interaction on segmentation and key-frame selection. This has two reasons. First, the video sequence needs to be segmented for shots with concave camera motion (as indicated by the first part of the camera trajectory in Fig. 1). Second, key-frames need to be selected out of this segment, for which sufficient corresponding points are found. If only few key-frames are included per segment, the number of corresponding points is low and hence the estimation error for solving equation 2. If many, or all frames are included as key-frame, equation 2 needs to be solved for each (subsequent) pair, resulting in either a large drift (if only subsequent pairs are included) or a large computational complexity (if the equation for the essentiality matrix is solved for each frame against all others). In both cases, results are sensitive for mismatches and localization errors of the feature points. In order to reduce such errors, feature points can be found in 3D, e.g. using a stereo camera system. The matching procedure is illustrated in Fig. 2. Each row shows the left and right image of the stereo camera. First, matches are found in between left and right image for each frame set individually. Second, corresponding points are established between properly matched features for subsequent key-frames (vertical lines) [10].

Robust video segmentation requires (1) determination of segments that can be used for 3D-reconstruction, while providing necessary key-frames and (2) provides a set of key-shots for each segment to the user while recording. In order to be robust for sequence parts with low structure, as resulted by unintentional recording, motion blur and blending of direct sunlight, camera-motion is approximated by the preceding equations, which robustly includes all types of camera motion as depicted by Fig. 1. In a second stage, 3D reconstruction is applied to relevant segments, using a selected set of key-frames and solving the equation for the essentiality matrix for a limited set of key-frame pairs.

VIDEO SEGMENTATION

This section describes a method for segmentation and key-shot selection. Video data is processed in three steps. First, the key-shots and key-frames are selected using a similarity measure based on the frame-to-frame motion estimation. Second, video segments are compared and a selection of key-shots is presented to the user. Loop closures are identified, and the user is able to indicate segments for 3D-reconstruction. The last step includes the actual 3D-reconstruction, using the stereo image pair for each selected key-shots. Apart from the last step, algorithms are designed for real-time processing, providing on-site feedback on the recorded sequence.

KEY-FRAME SELECTION

The process of key-frame selection includes all steps for determining key-shots and video segments. The method is designed for a monocular image sequence, running real-time on a laptop PC. Beside selection of key-frames, key-shots and video segments, it creates a data stack, with local appearance and motion information, which can be used for comparison between segments and detection of loop closures. The method comprises the following steps:

(1) Determination of frame-to-frame motion
(2) Determination of the local change of appearance
(3) Segmentation and key-frame selection
Frame-to-frame motion is determined using a 2D-homography between subsequent images. First, a set of feature points are determined for low resolution images, and a correspondence between feature points is established. Second, the set corresponding feature points is used to solve the following motion equation: $x'=Ax$, where A is a matrix with a block R that represents rotation and a column that represents translation and x and x' are the homogeneous coordinates for a point on the original and projected image. Here $R = [a\ b; -b\ a]$, $a = r \cos THETA$, $b = r \cos THETA$, contain the scaling and rotation parameters and where, $t = [x_t\ y_t]$ are the translation parameters in homogeneous coordinates. As noted in the introduction, the equation $x'=Ax$ describes a 2D-homography, assuming all points to be on a planar surface.

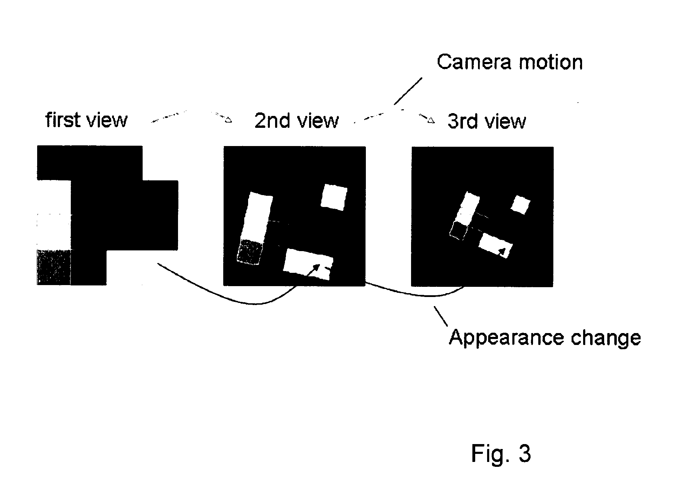

Fig. 3 exemplifies typical transformations obeying $x=Ax'$, showing translation scaling and in-plane rotation. After determining the frame-to-frame motion, a warping can be applied that optimally aligns subsequent images, given the motion constraints. For typical video frame rates, and recording of static objects, constraints of the equation $x'=Ax$ suffice to determine a proper alignment.

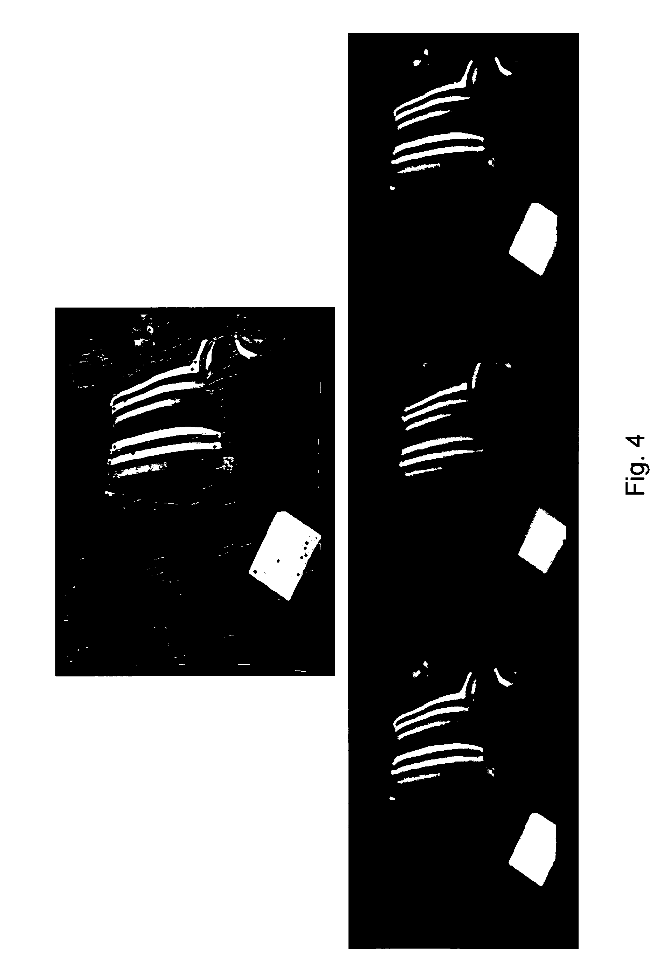

Fig. 4 shows the results on aligning two subsequent images. The upper panel indicates the current frame, including motion vectors. The lower left panel shows the image of the previous frame, warped to the current. The centermost lower panel shows a superposition of both previous and current image, without motion correction by 2D warping. The rightmost lower panel shows a superposition after motion correction. Generalizing the rotation block R of the previous matrix to a non-symmetric 2x2 matrix would allow any affine transformation, i.e. additional freedom for pan and tilt angles of the object plane. In practice, recorded objects are typically non-planar, feature points may be sparse and correspondences can be erroneous. Determining full egomotion results often in suboptimal solutions causing erroneous results. Using only four degrees of freedom, solutions properly convergence to an acceptable result, even if only few corresponding points are found. After motion correction, the local image appearance is compared. For this, the image is subdivided in rectangular regions, as indicated in the left panel of Fig.3. For each image region, a local descriptor is determined, resulting in a histogram of descriptor values. Typically, a gray-value histogram suffices for a reasonable comparison.

Given histograms for two subsequent images, for which the first is aligned to the second, as depicted in Fig. 4, the change of appearance can be determined from the histogram intersection $S=Sum\ (arg\ min\ Hi(t), HPi(t-1))$, where S is a measure for the local similarity Hi(t) and HPi (t -1) are the histograms for the image at time t and the warped image at time t -1, respectively. Since each image is divided in $m \times n$ sub regions, a data stack can be designed with $m \times n \times (t-1)$ entries, where each entry denotes the similarity between frame t and t -1 for a given image position. Given the data stack of similarity values and the local motion transformations, time-space segmentation is performed by integrating local similarity vales over time, while correcting for a spatial shift according to the estimated motion. Space-time segmentation is implemented as follows: for each frame at t, a Gaussian window is determined centered at t and all previous and current values are added within {t - DELTA, t + DELTA}. Positions are initially defined by the $m \times n$ grid at time t, but subsequently transformed according to the image motion. Each time step, the grid value is chosen at the nearest position of the $m \times n$ grid, or set to zero if out of view. This way, a $m \times n \times (t -1)$ volume is created, for which each entry depicts the amount of similarity of the depicted object region over time. As to be expected, homogeneous regions show large similarity, since their descriptors do not change with changing view-points. On the other hand, appearance of colorful, non-planar objects changes largely, partly because colorful objects change appearance for different perspective, partly because planar motion correction for non-planar objects causes a larger spatial accuracy.

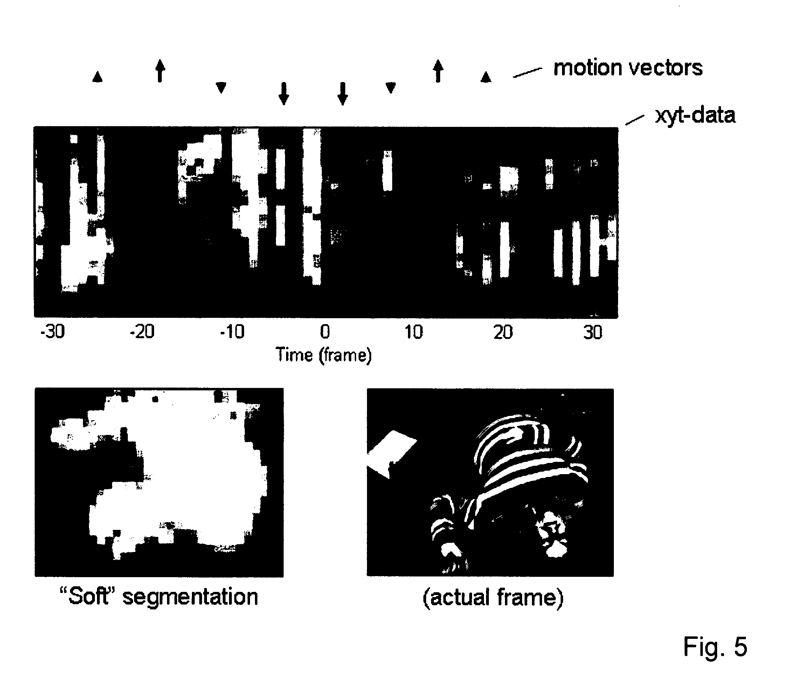

Fig. 5 shows a segmentation example for one frame of the video sequence using an integration width DELTA=32, a 32x24 sized grid, using gray-value histograms (10FPS recording). The upper panel indicates a 2D projection of the xyt-data stack (columns display data for image with different spatial position, as given by the motion vectors). The lower left panel shows the soft segmentation, as given by the accumulation of similarity values (a bright value indicates large dissimilarity). The lower right panel shows the gray-value image of the actual frame.

Finally, the video sequence is segmented by analyzing the average value of the accumulated similarity for each frame. For each grid point, the similarity value is accumulated over time. If the accumulated similarity is large, the region has a consistent appearance. If the accumulated similarity is low, the regions changes largely for subsequent frames.

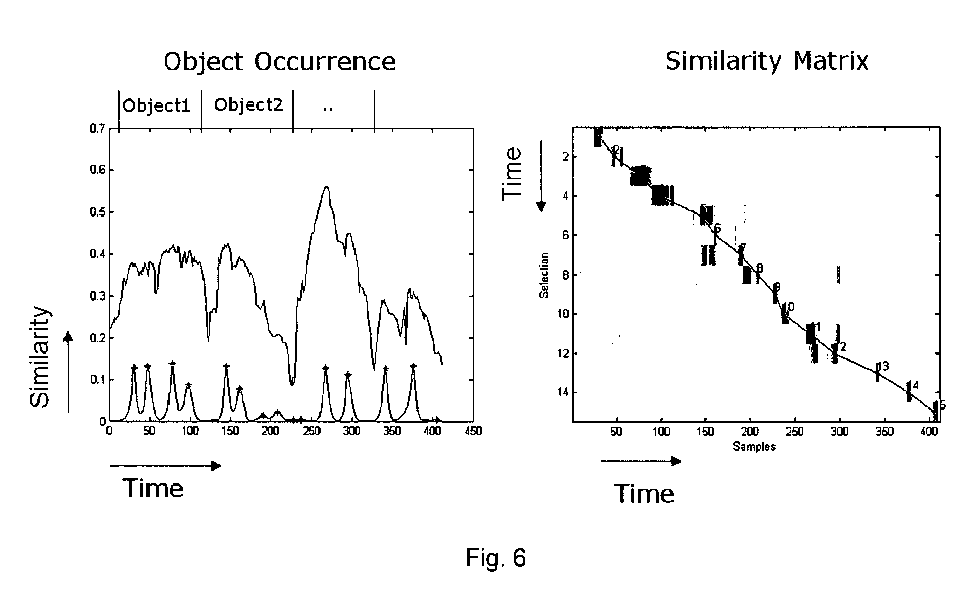

Key-shots are defined by analyzing the inconsistency averaged over all grid points. If the on the average, regions are dissimilar, one or more key shots can be determined. If the average inconsistency is low, regions are similar and the segment can be described by adjacent key-shots. Fig. 6 show an example for key-shot selection. The left panel shows the consistence (upper line) for a each frame. Segment boundaries are set at frames that show locally a minimal consistence. Furthermore, by analyzing the smoothness of the peaks in the consistency (lower black line), a set of key-frames is defined. The right panel shows the similarity matrix of the selected key-frames to all other frames, as derived from the xyt-stack. Large similarity is indicated, and horizontal bars indicate segments with similar contents. A set of intermediate key-frames is determined, by randomly frames within each consistent segment.

Scene modeling

In order to determine re-occurrences of objects and perspectives, a descriptor is determined that characterizes the local scene appearance. This descriptor is used to determine a match to descriptors of all other video fragments. In order to be computational efficient, the descriptor needs to be compact, while summarizing characteristics for preferable several frames [15]. Changes of perspective are crucial for changes of the local image scene and correcting for ego-motion, as by using the similarity measure between warped frames, would eliminate crucial scene changes. On the other hand, the egomotion does not depend on the scene, and would not provide a useful criterion itself. Instead, the scene is modelled using global appearance changes. For this, image descriptors are distributed over the field of view and their values are modelled using a sliding window approach

$$H_t=(1\text{-}ALPHA)*D_t+ALPHA*H_{t-1}$$

where, Ht is the local model value, Dt is the local image descriptor, such as a color histogram vector and ALPHA is the decay constant. The first model is stored as "key model" after a fix time (say ~1s), thereafter only models are stored if the similarity to the last key model is below a certain threshold. These key models can be used for sparse matching between scene candidates.

Fig. 5 shows an example of scene modelling for a vehicle based camera system. The field of view is divided in 6x6 regions and for each region a gray value histogram is extracted with 16 bins. Each bin value is modelled, as for the equation above, and models are matched using the histogram intersection. The resulting similarity matrix is established for each 10th frame only. The result is shown in the left panel. Regions are indicated that have a large similarity, as shown along the diagonal. This is due to homogeneity of the scene and the relative slow adaptation rate (ALPHA=0.95, 10fps). At frame 70 the vehicle repeats the same round for a while (loop closure) as visible by a high similarity value along a line about parallel to the diagonal. Additional to the loop closure, sporadic hot spots with high similarity can be found. The left panels shows the frames associated with such hot spots. Although the associated building (each left-right pair) are not the same, the associated images are very similar at first glance.

3D Reconstruction

Finally, a 3D reconstruction technique is applied in order to illustrate processing steps following the key-shot selection. First, the motion between subsequent key-frames is determined in following steps [10]:

(1) Stereo matching
(2) Key-frame matching
(3) Robust motion estimation

Step (1) matches feature points between left and right image of the stereo pair. The disparity is determined for each pair of corresponding points, and the right image point coordinates {x,y,d} are converted to a point in 3D, {X,Y,Z} using camera calibration parameters, where lower case {x,y} denotes the image position and d denotes the disparity between left and right image in pixels. Step (2) determines the ego-motion between subsequent key-frames determining (i) correspondences of feature points for both right images, and (ii) solving the essential matrix. The matching scheme is visualized in Fig. 2. Since, from step (2) the essential matrix is known, the camera projections {P, P'} can be derived that relate image points {x, x'}.

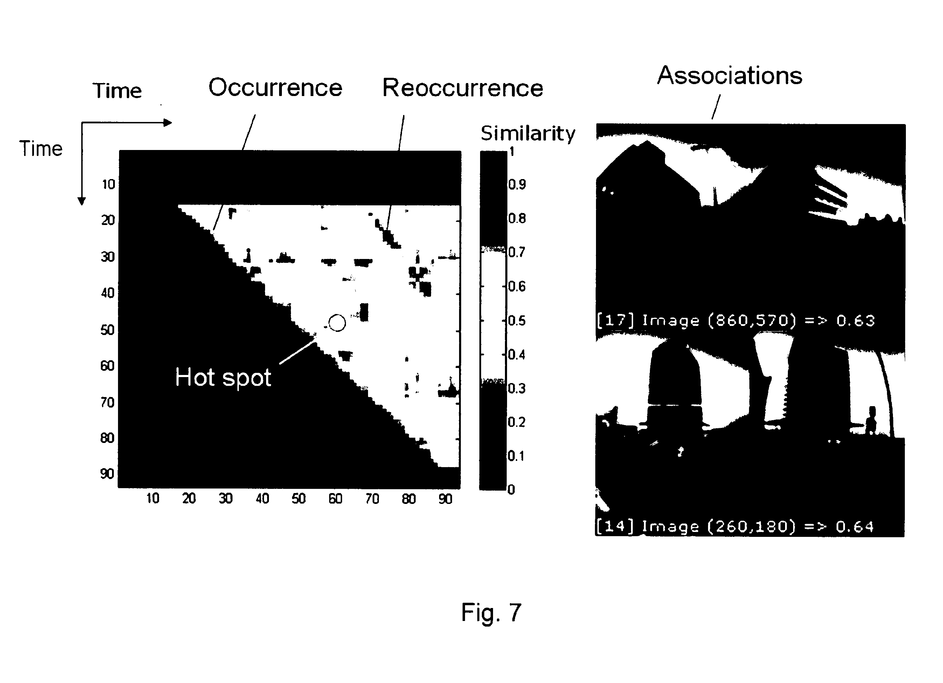

However, the Euclidian motion can directly be determined using the 3D points as follows from step (1), using following X'=RX+t, where, R is the rotation matrix and t is the translation vector, and {X, X'} are the 3D point position vectors as follows from the stereo correspondence for the subsequent key-frames. Determination of the essential matrix in step (2) may be redundant for solving the geometry, however it strongly helps to pre-select the set of corresponding points. First, step (2) uses Ransac to get a reasonable set of inliers for solving the essential matrix. Second, step (3) provides robust motion estimation by using 3D positions, as follows from step (1) but only for inliers as follow from step (2). After determination of the ego-motion, using a sparse set of 3D points of all key-frames, a 3D point cloud is determined based on dense disparity matching. Following steps are performed: (4) Dense stereo matching (5) Point cloud mapping (6) Surface reconstruction For each key frame, the disparity map is determined using a real-time stereo matching algorithm [13]. For each valid entry in the disparity map, a 3D point is calculated, forming a point cloud in the coordinate system of the current keyframe. Point clouds of subsequent key-frames are mapped to each other and the ensemble of point clouds is used for surface reconstruction. For longer sequences, especially if using dense key-frame sampling and high resolution images, the point cloud ensemble becomes huge (tens of millions) and impractical to handle. In order to control the point cloud complexity, a voxelization is used that, at least locally, reduces the point cloud complexity without loss of detail. The voxelization is done in 3 steps. (i) A cuboid is defined in front of the current camera's view, including most of the image field of view and a range that coincide with most disparity values of the depth map, and subdivided in voxels. (ii) Each point of the point cloud is assigned to one voxel and the points within one voxel are merged. (iii) For a next keyframe, the remaining point cloud is transformed, using eq.5, and additional points are merged for all voxels within the cuboid of the actual frame. Fig. 7 shows accumulation of surface points after processing few key-frames of about the same object. The upper panel indicates the point cloud in three dimensions. A box indicates the cuboid, in which points are merged (units in mm). The lower panels show the left and right image of the actual key-frame, respectively. In order to reduce merging errors, points within one voxel are clustered according to color and surface normal (as derived from the disparity image), and several points are propagated within one voxel in case of ambiguities. Finally, Poisson surface reconstruction is applied to the entire point cloud, for purpose of visualization [14].

CRIME SCENE ANALYSIS

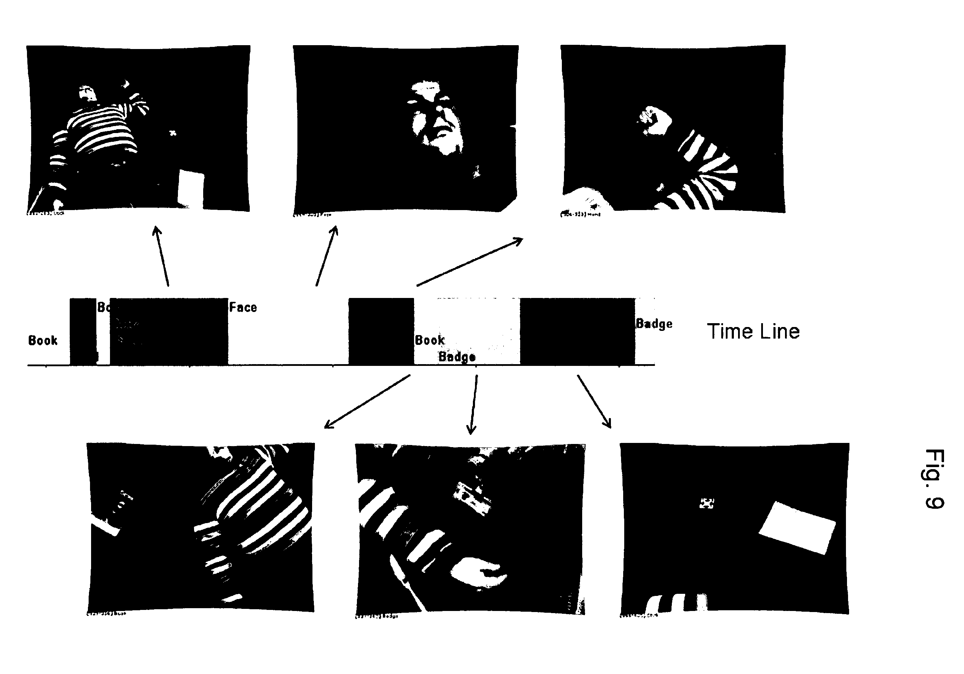

The proposed method is applied optical recordings of crime scenes as used for police training. In order to illustrate the effects on real-life scenes, a re-enactment was recorded with typical crime scene conditions. The resulting sequence was segmented manually, resulting in a set of 25 segments of dominated objects. Fig. 9 shows the shots for different segments as identified by human observation. Segments differ in length, depending on the intention of recording. Some details become particular attention, like the stick in upper left and lower right image, face and the badge. Since the camera comes closer for these objects, and the segments contains many frame, these shots specially suits 3Dreconstruction. Intermediate segments are mainly used to establish a spatial arrangement between different objects of interest. Since the distance to the object is relatively small in all cases, this can be done by full 3D-reconstruction. If objects of interests are further apart, this relation may only be established coarsely or only based on 2D analysis (as for the second part of the camera trajectory shown in Fig. 1).

Key-frame selection

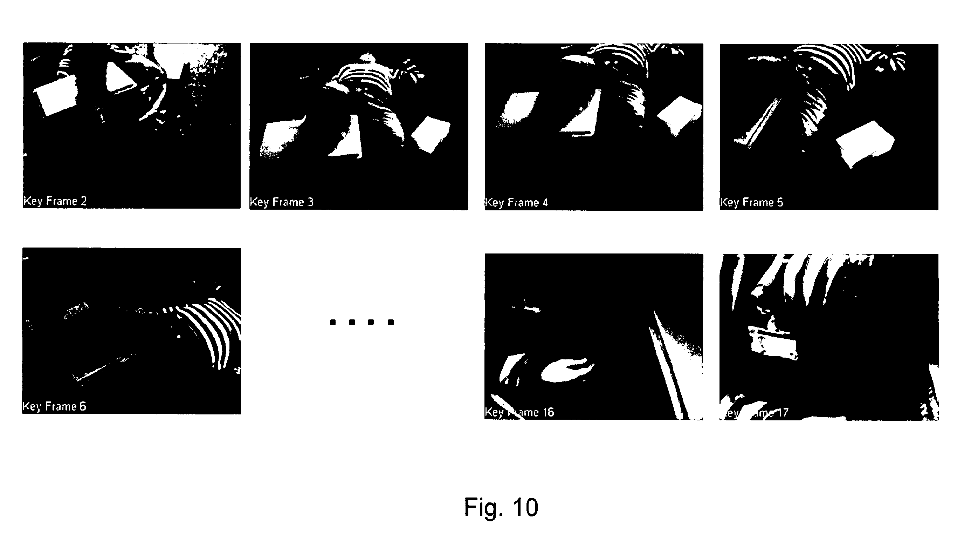

The key-frames were selected for the first 430 frames of the re-enacted crime scene recording. Images were downscaled to 512x385pixels, using frames of the left camera only. Totally, 15 segments were identified, including 19 key-shots and 21 additional key-frames. Table 1 shows a comparison with the manual annotated sequence, and a key-frame selection by a computer vision expert. Although the number of segments and key-frames is smaller, the selection included a segment for each major shot in the scene. Few transitional segments were omitted by the algorithm (duration 3-5 frames), but selected during manual annotation. The number of selected key-frames is smaller than that of the expert annotation. This is partly caused by the missing of the short segments, partly, because manual reconstruction only uses a subset of the key-frames for creating a 3D-point cloud. If all key-frames of the manual segmentation would be used, the point cloud becomes extremely large and difficult to handle for outliers. This second selection procedure is based on feedback of the reconstruction results. For automatic selection, this user feedback is not given and all automatic selected key-frames are used in order to provide a complete reconstruction result. The point cloud complexity is controlled using the voxelization as discussed above. Comparing the full list of manually selected key frames (as used for motion determination), the number of key-frames largely coincides for the larger segments. Automatic selection puts little more emphasis for frames at which the distance to the object changes (zooming) and in-place camera rotations. Fig. 10 shows a series of key-shots as used for 3Dreconstruction. Although the perspective and/or the distance to the object differ between subsequent key-frames, central positioned objects re-occur in the subsequent frames. This enables determination of 3D ego-motion by key-point

3D-reconstruction

This section illustrates further processing steps for 3D-reconstruction. Since the main contribution of this paper is the pre-processing, effects on post-processing, outlier reduction, surface reconstruction and 3D rendering were left out of the analysis. Results are presented as 3D-point cloud, for which each point consists of a dot. Following steps were performed to all 40 key-frames provided for the sequence as given by table 1: ego-motion determination from SIFT features, dense disparity calculation and point cloud voxelization.

Table I segmentation result

|  | Automatic selection | Manual selection |
|---|---|---|
| number of segments | 15 | 25 |
| number of key frames | 40 | 79 |
| number of reconstructions | 1 | 1 |

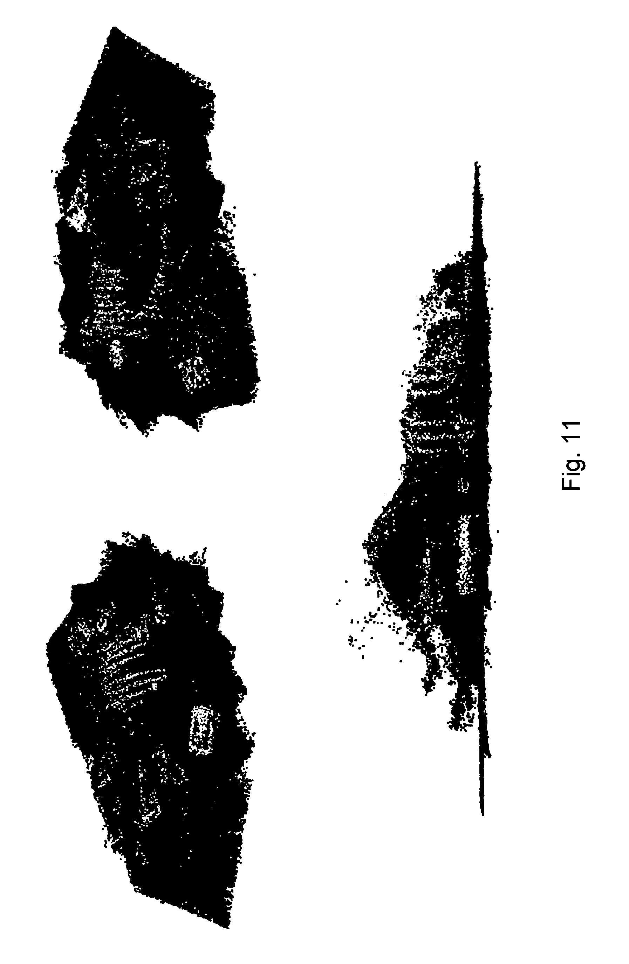

Totally 1M points were visualized by 3D projection, as shown by Fig. 11. Apart from some occasional outliers, and incomplete surfaces (book, box) the ego-motion was determined properly, providing one plane for all pixels of the ground plane.

Automatic detection of key-shots is an important step for unsupervised 2D and 3D video processing. A method is proposed that provides a key-shot selection for recording with a hand-held camera, as can be used for user feedback and 3D scene reconstruction. The underlying technique is based on a measure for the local image similarity, under constraint of planar motion for subsequently recorded frames. Based on this measure, key frames are selected, representing video segments with largely consistent contents and small changing of appearance. The key-shot selection is used to provide on-site feedback, indicating repetitive recording to the user and 3D reconstruction. The similarity measure provides a dynamic scene model, as can be used for association and loop closure detection. Selected key-frames are compared to manual key-frame selection for a re-enacted crime scene. Results show that most important segments are presented by key-frames, enabling a proper determination of the full 3D ego-motion. A 3D reconstruction is illustrated from the point cloud, as result from dense disparity matching and ego-motion of all the key-frames. Although automatic selection uses more input frames than for manual 3D reconstruction, the number of points can be controlled, even if 3D points of all key-frames are superposed. Further steps include smoothing and outlier reduction of the point cloud, enabling unsupervised surface reconstruction, from hand-held camera recordings.

REFERENCES

[1] Agrawal, M., K. Konolige, K. Bolles, R.C., Localization and Mapping for Autonomous Navigation in Outdoor Terrains : A Stereo Vision Approach, Applications of Computer Vision, 2007. WACV '07.

[2] Davison A.J., Real-Time Simultaneous Localisation and Mapping with a Single Camera, ICCV 2003.

[3] Newman et al, Outdoor SLAM using Visual Appearance and Laser Ranging, ICRA 2006.

[4] Hansen et al., Scale Invariant Feature Matching with Wide Angle Images, Int.Conf. on Intelligent Robots and Systems 2007.

[5] Thormaehlen et al. Keyframe Selection for Camera Motion and Structure Estimation from Multiple Views, ECCV 2004.

[6] Repko, Pollefeys, 3D Models from Extended Uncalibrated Video Sequences: Addressing Key-frame Selection and Projective Drift, Int. Conf. on 3-D Digital Imaging and Modeling 2005

[7] Adam, Rivlin, Shimshoni, Robust Fragments-based Tracking using the Integral Histogram, CVPR 2006.

[8] Liu et al. Shot reconstruction degree: a novel criterion for key frame selection, Pattern Recognition Letters, Volume 25, Issue 12, September 2004, Pages 1451-1457.

[9] Hartley, Zisserman Multiple view geometry in computer vision, Cambridge University Press, 2000.

[10] W. van der Mark et al. "3D Scene Reconstruction with a Handheld Stereo Camera", Proc. Cognitive Systems with interactive Sensors, COGIS 2007.

[11] X. Song, G. Fan, Key-frame extraction for object-based video segmentation, ICASSP 2005.

[12] J. Calic, E. Izquerdo, Efficient key-frame extraction and video analysis, Information Technology: Coding and Computing, 2002,

[13] W. Mark, D. Gavrila, Real-Time Dense Stereo for Intelligent Vehicles, Trans. Intel. Transporatation Systems, Vol. 7/1, 2006

[14] M. Kazhdan, M. Bolitho, and H. Hoppe, Poisson Surface Reconstruction, Symposium on Geometry Processing 2006.

[15] L.A. Clemente et al. Mapping Large Loops with a Single and-Held Camera. RSS 2007.

**Claims**

1. A method of processing a sequence of video images, the method comprising

   - determining overall transforms from images from the video sequence for time points T' in a range of time points onto an image from the video sequence for a selected time point T;
   - computing, for each of a plurality of basic regions in the image for the selected time point T, a set of difference measures between basic data representative of statistical distribution of values derived from the image for the selected time point T for image positions in the basic region and further data representative of statistical distribution of values derived from the respective ones of images for the time points T' in said range, for image positions in further regions in the respective ones of images, using further regions that map to the basic region in the image for the selected time point according to the overall transform for the respective one of the time points T';
   - computing, for each of the basic regions, an accumulated value of the difference measures in the set.

2. A method according to claim 1, wherein said computing of the set of difference measures between the basic data and the further data comprises computing the further data from image content in the further regions and computing the difference measures from comparisons of the basic data and the further data for the images at respective ones of the time points in said range.

3. A method according to claim 1 or 2, comprising computing histograms with counts of image positions in the basic regions and the further regions that have the values in respective histogram bins, the basic data and the further data comprising the histograms, the difference measure being a measure for difference between histograms.

4. A method according to claim 1, wherein said computing of the sets of difference measures for the basic region comprises

   - computing adjacent-pair difference measures between data representative of statistical distribution of image values in pairs of images for temporally adjacent time points T", T"-1 in said range, the adjacent-pair difference measures being computed using pairs of regions that map onto each other in the pairs of images by a differential overall transform between the temporally adjacent time points, with the pairs of regions having region reference locations that are mapped to the region in the image for the selected time point T by the overall transforms,
   - the difference measures between the basic data and the further data of a time point T' being obtained according to a sum of adjacent-pair difference measures for time adjacent time T", T" -1 in a time interval between the selected time point T and the time point T' for which the difference measure is determined.

5. A method according to claim 1, comprising

   - computing the data representative of statistical distribution of image values in predetermined regions in the images for time points T' in said range,
   - transforming the statistical data according to the overall transforms determined for these time points and
   - computing the measure of difference by comparing the basic data with the transformed data for the predetermined regions.

6. A method according to claim 1, comprising computing the further data form image content in further regions with a shape that is mapped to the shape of the basic region by the overall transformations.

7. A method according to any one of the preceding claims, comprising detecting positions in the image for the selected time point that show scene points outside a basic three dimensional plane that corresponds to image points that transform according to the overall transformations, by comparing the accumulated difference measure for basic regions associated with said positions with a threshold value.

8. A method according to any one of the preceding claims, comprising

- repeating the computation of the accumulated values for a plurality of selected time points;
- counting, for each of the plurality of selected time points a count of basic regions for which the accumulated value exceeds a threshold value;
- selecting isolated time points at which the count as a function of the time points has local maximum values.

9. A method according to any one of the preceding claims, comprising performing loop detection in the video sequence, selecting the range of time points dependent on a detected loop time delay after which it is detected that objects in the image for the selected time point return into view.

10. A method according to any one of the preceding claims, wherein the overall transforms are affine transforms with respective single sets of affine transform parameters each for a respective overall transform between the image at the selected time point and the image for a respective one of the time points T' in the range of time points.

11. An image processing system, the image processing system comprising

- a camera configured to capture a video sequence;
- a processor configured to determine overall transforms from images from the video sequence for time points T' in a range of time points onto an image from the video sequence for a selected time point T; and to compute, for each of a plurality of basic regions in the image for the selected time point T, a set of difference measures between basic data representative of statistical distribution of values derived from the image for the selected time point T for image positions in the basic region and further data representative of statistical distribution of values derived from the respective ones of images for the time points T' in said range, for image positions in further regions in the respective ones of images, using further regions that map to the basic region in the image for the selected time point according to the overall transform for the respective one of the time points T' and to compute for each of the basic regions, an accumulated value of the difference measures in the set.

12. An image processing system according to claim 11, wherein the processor is configured to repeat the computation of the accumulated values for a plurality of selected time points, to count, for each of the plurality of selected time points a count of basic regions for which the accumulated value exceeds a threshold value and to select isolated time points at which the count as a function of the time points has local maximum values.

13. A computer program product, comprising a program of instructions for a programmable processor that, when executed by the programmable processor cause the programmable processor to

- receive a video sequence;
- determine overall transforms from images from the video sequence for time points T' in a range of time points onto an image from the video sequence for a selected time point T;
- compute, for each of a plurality of basic regions in the image for the selected time point T, a set of difference measures between basic data representative of statistical distribution of values derived from the image for the selected time point T for image positions in the basic region and further data representative of statistical distribution of values derived from the respective ones of images for the time points T' in said range, for image positions in further regions in the respective ones of images, using further regions that map to the basic region in the image for the selected time point according to the overall transform for the respective one of the time points T';
- compute, for each of the basic regions, an accumulated value of the difference measures in the set.

Fig. 1

Fig. 2

Fig. 3

Fig. 4

motion vectors

xyt-data

Time (frame)

"Soft" segmentation

(actual frame)

Fig. 5

Fig. 6

Fig. 7

Fig. 8

Fig. 9

Fig. 10

Fig. 11

**Fig. 12**

**Fig. 13**

**Fig. 14**

Europäisches
Patentamt

European
Patent Office

Office européen
des brevets

# EUROPEAN SEARCH REPORT

Application Number

EP 09 15 7131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAZDI M ET AL: "Scene break detection and classification using a block-wise difference method"<br>PROCEEDINGS 2001 INTERNATIONAL CONFERENCE ON IMAGE PROCESSING. ICIP 2001. THESSALONIKI, GREECE, OCT. 7 - 10, 2001; [INTERNATIONAL CONFERENCE ON IMAGE PROCESSING], NEW YORK, NY : IEEE, US, vol. 3, 7 October 2001 (2001-10-07), pages 394-397, XP010563366<br>ISBN: 978-0-7803-6725-8<br>* abstract *<br>* sections 3 and 4 *<br>----- | 1-13 | INV.<br>G06T7/20 |
| A | KOPRINSKA I ET AL: "Temporal video segmentation: A survey"<br>SIGNAL PROCESSING. IMAGE COMMUNICATION, ELSEVIER SCIENCE PUBLISHERS, AMSTERDAM, NL,<br>vol. 16, no. 5,<br>1 January 2001 (2001-01-01), pages 477-500, XP004224651<br>ISSN: 0923-5965<br>* abstract *<br>* page 479, right-hand column, last paragraph - page 480, left-hand column, paragraph 1 *<br>* sections 2.1.2 and 2.1.3.2 *<br>----- | 1-13 | |

TECHNICAL FIELDS
SEARCHED (IPC)

G06T
G06K
H04N
G06F

-/--

The present search report has been drawn up for all claims

| Place of search | Date of completion of the search | Examiner |
|---|---|---|
| Munich | 11 August 2009 | Engels, Angela |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 09 15 7131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEFEVRE S ET AL: "A review of real-time segmentation of uncompressed video sequences for content-based search and retrieval"<br>REAL-TIME IMAGING, ACADEMIC PRESS LIMITED, GB,<br>vol. 9, no. 1,<br>1 February 2003 (2003-02-01), pages 73-98, XP004413477<br>ISSN: 1077-2014<br>* abstract *<br>* section 4 * | 1-13 | |
| A | PORTER S.V.: "Video Segmentation and Indexing Using Motion Estimation"<br>UNIVERSITY OF BRISTOL,<br>February 2004 (2004-02), pages 1-158, XP002540937<br>* chapters 3.1, 3.6 and 4.1 *<br>* figures 3.1,4.4 * | 1-13 | |
| A | LUPATINI G ET AL: "Scene break detection: a comparison"<br>REASEARCH ISSUES IN DATA ENGINEERING, 1998. 'CONTINUOUS-MEDIA DATABASE S AND APPLICATIONS'. PROCEEDINGS., EIGHTH INTERNATIONAL WORKSHOP ON ORLANDO, FL, USA 23-24 FEB. 1998, LOS ALAMITOS, CA, USA,IEEE COMPUT. SOC, US,<br>23 February 1998 (1998-02-23), pages 34-41, XP010268563<br>ISBN: 978-0-8186-8389-3<br>* abstract *<br>* section 3.2 * | 1-13 | TECHNICAL FIELDS SEARCHED (IPC) |

-/--

The present search report has been drawn up for all claims

| Place of search | Date of completion of the search | Examiner |
|---|---|---|
| Munich | 11 August 2009 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 15 7131

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANNES VAN DER MARK ET AL: "3-D Scene Reconstruction with Handheld Stereo Camera" COGNITIVE SYSTEMS WITH INTERACTIVE SENSORS : COGIS'07, 26 - 27 NOVEMBER 2007, STANFORD UNIVERSITY, CALIFORNIA, USA, SOCIÉTÉ DE L'ÉLECTRICITÉ, DE L'ÉLECTRONIQUE ET DES TECHNOLOGIES DE L'INFORMATION ET DE LA COMMUNICATION, PARIS, 28 November 2007 (2007-11-28), page 8pp, XP009121238 * the whole document * ----- | 1-13 | |
| | | | TECHNICAL FIELDS SEARCHED (IPC) |

The present search report has been drawn up for all claims

| Place of search | Date of completion of the search | Examiner |
|---|---|---|
| Munich | 11 August 2009 | Engels, Angela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7447337 B

**Non-patent literature cited in the description**

- **Agrawal, M. ; K. Konolige ; K. Bolles, R.C.** Localization and Mapping for Autonomous Navigation in Outdoor Terrains : A Stereo Vision Approach. *Applications of Computer Vision, 2007. WACV '07,* 2007
- **Davison A.J.** Real-Time Simultaneous Localisation and Mapping with a Single Camera. *ICCV,* 2003
- **Newman et al.** Outdoor SLAM using Visual Appearance and Laser Ranging. *ICRA,* 2006
- **Hansen et al.** Scale Invariant Feature Matching with Wide Angle Images. *Int.Conf. on Intelligent Robots and Systems,* 2007
- **Thormaehlen et al.** Keyframe Selection for Camera Motion and Structure Estimation from Multiple Views. *ECCV,* 2004
- **Repko ; Pollefeys.** 3D Models from Extended Uncalibrated Video Sequences: Addressing Key-frame Selection and Projective Drift. *Int. Conf. on 3-D Digital Imaging and Modeling,* 2005
- **Adam ; Rivlin ; Shimshoni.** Robust Fragments-based Tracking using the Integral Histogram. *CVPR,* 2006
- **Liu et al.** Shot reconstruction degree: a novel criterion for key frame selection. *Pattern Recognition Letters,* September 2004, vol. 25 (12), 1451-1457
- **Hartley.** Zisserman Multiple view geometry in computer vision. Cambridge University Press, 2000
- **W. van der Mark et al.** 3D Scene Reconstruction with a Handheld Stereo Camera. *Proc. Cognitive Systems with interactive Sensors, COGIS,* 2007
- **X. Song ; G. Fan.** Key-frame extraction for object-based video segmentation. *ICASSP,* 2005
- **J. Calic ; E. Izquerdo.** Efficient key-frame extraction and video analysis. *Information Technology: Coding and Computing,* 2002
- **W. Mark ; D. Gavrila.** Real-Time Dense Stereo for Intelligent Vehicles. *Trans. Intel. Transporatation Systems,* 2006, vol. 7/1
- **M. Kazhdan ; M. Bolitho ; H. Hoppe.** Poisson Surface Reconstruction. *Symposium on Geometry Processing,* 2006
- **L.A. Clemente et al.** Mapping Large Loops with a Single and-Held Camera. *RSS,* 2007